# EUROPEAN PATENT APPLICATION

(11) **EP 3 812 116 A1**
(43) Date of publication of application: **28.04.2021**
(21) Application number: 20202185.3
(22) Date of filing: 16.10.2020
(51) Int. Cl.: B28B 11/24, C04B 35/638, C04B 35/64, B28B 1/00, B33Y 40/20

(54) **METHOD FOR MAKING A CERAMIC PRODUCT**

(30) Priority: 22.10.2019 IT 201900019514
(71) Applicant: Bettini S.r.l., 23804 Monte Marenzo (LC) (IT)
(72) Inventor: FERRARIS, Matteo, I-23804 Monte Marenzo, LECCO (IT); BRINI, Alvaro, I-23804 Monte Marenzo, LECCO (IT); COLLEONI, Simone, I-23804 Monte Marenzo, LECCO (IT); ANGIOLETTI, Fabio, I-23804 Monte Marenzo, LECCO (IT)
(74) Representative: Leihkauf, Steffen Falk

(57) **Abstract**

A method for manufacturing a ceramic product, comprising the manufacturing steps of subjecting a ceramic green body to a step of primary heating, wherein the ceramic green body is progressively heated from ambient temperature (Ta) to a final primary heating temperature (T1), so as to remove binders from the ceramic green body and obtain a semi-finished ceramic product free from binders; subjecting the semi-finished ceramic product to a step of sintering, wherein the semi-finished ceramic product is progressively heated from an initial sintering temperature (Tis), at which the initial sintering temperature (Tis) is either higher than or equal to ambient temperature (Ta), to a final sintering temperature (T3), at which the final sintering temperature (T3) is higher than the final primary heating temperature (T1), so as to sinter the semi-finished ceramic product and obtain the ceramic product.

## Description

The present invention relates to a manufacturing method of a ceramic product.

Ceramic materials are particularly appreciated in the manufacturing industry because of their high thermal and mechanical properties, such as heat resistance, wear resistance, corrosion resistance, hardness, and rigidity.

However, the widespread use of ceramic materials in the manufacturing industry is still hampered by the poor suitability of these materials to be subjected to the most modern and high-performance manufacturing processes, such as additive manufacturing (3D printing).

The additive manufacturing of ceramic materials has several critical aspects, one of which is the execution of a heat treatment adapted to transform a ceramic green body into a ceramic product.

Indeed, the ceramic green body, printed by means of 3D printing, must be subjected to a heat treatment to eliminate the binders and polymeric materials with which the ceramic green body is soaked, to obtain the final ceramic product.

The need is felt to obtain a ceramic product, starting from a ceramic green body, by means of a rapid heat treatment, the rapidity of which does not invalidate the quality of the final ceramic product, thereby avoiding the formation of defects and/or cracks.

It is the object of the present invention to provide an improved method for manufacturing a ceramic product having features such as to avoid at least some of the drawbacks of the prior art.

It is the object of the present invention to provide a rapid method for manufacturing a ceramic product.

It is a further particular object of the present invention to provide a method for manufacturing a ceramic product having better thermomechanical properties.

These and other objects are achieved by means of a method for manufacturing a ceramic product according to claim 1.

Dependent claims relate to preferred and advantageous embodiments.

Further features and advantages of the present invention will be more apparent from the description of some preferred embodiments thereof, given hereinafter by way of non-limiting example with reference to the following figures, in which:
- figure 1 is a perspective view, showing visible and non-visible details of a device for manufacturing a ceramic filament, according to an embodiment of the invention;
- figure 2 is a diagrammatic longitudinal section view of a device for manufacturing a ceramic filament, according to an embodiment of the invention;
- figure 3 is a diagrammatic view of a system for manufacturing a ceramic filament, according to an embodiment of the invention;
- figure 4 is a diagrammatic longitudinal section view of a device for manufacturing a ceramic green body, according to an embodiment of the invention;
- figure 5 is a perspective view, showing visible and non-visible details of a device for manufacturing a ceramic green body, according to an embodiment of the invention;

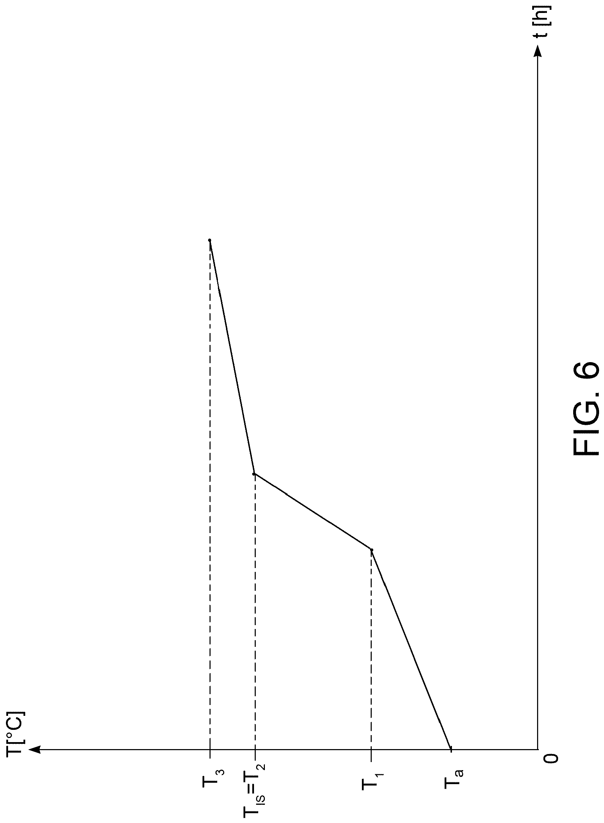

- figure 6 is a diagrammatic view of an embodiment of a ceramic product, according to an embodiment of the invention.

In the following description, the term "ceramic filament" means a filament comprising ceramic material mixed in a polymer matrix and adapted to feed a device for additive manufacturing.

Similarly, the term "ceramic green body" means a green body comprising ceramic material mixed in a polymer matrix, manufactured by an additive manufacturing process carried out by working a ceramic filament.

### Description of a device and method for manufacturing a ceramic filament

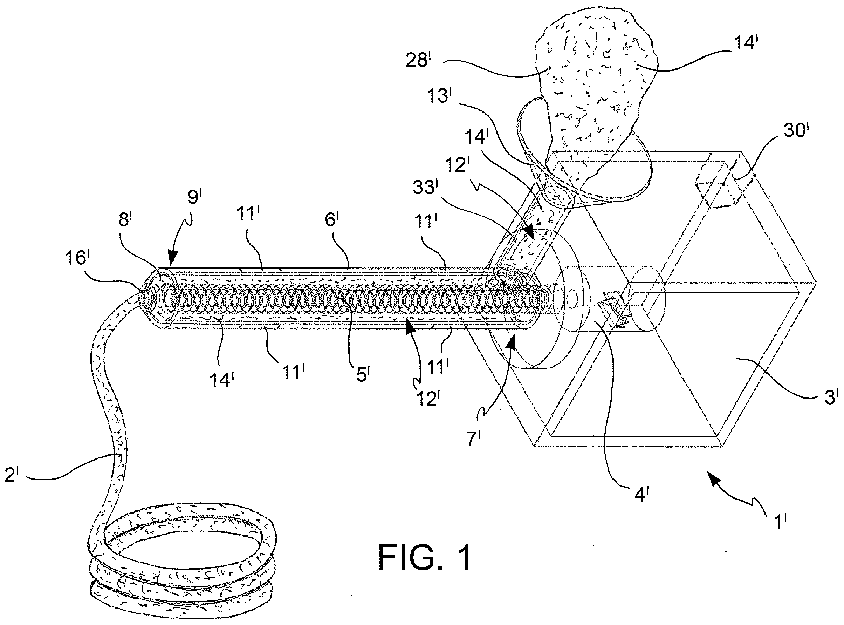

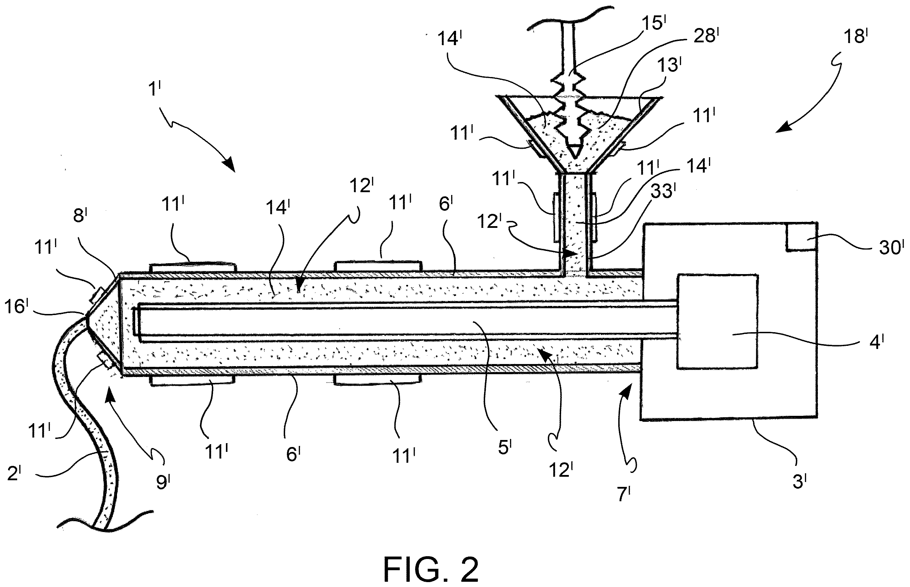

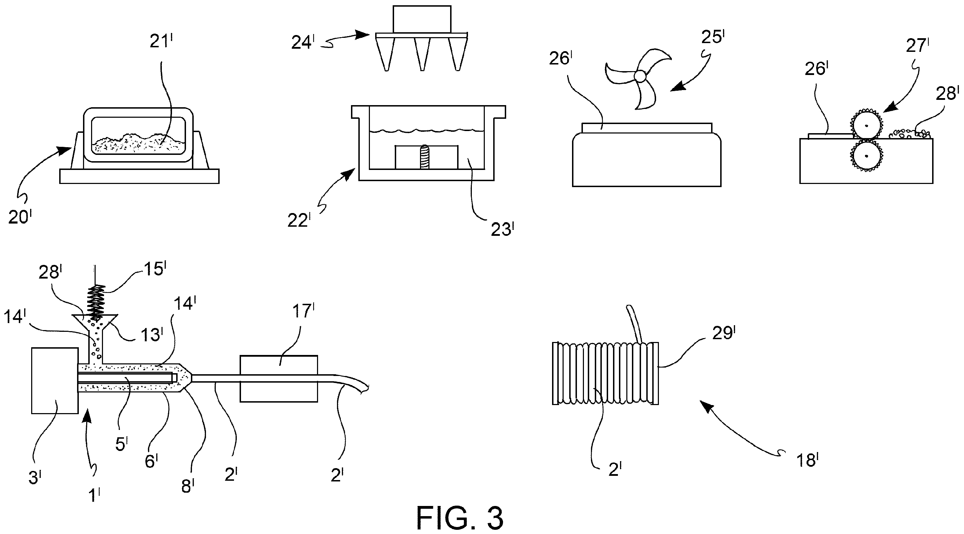

With reference to figures 1, 2 and 3, a device 1' for manufacturing a ceramic filament 2' comprises a housing 3', in which an electric motor 4' is accommodated.

The electric motor 4' is operatively connected to a worm screw 5'.

The worm screw 5' is arranged inside a cylinder 6', which is connected to the housing 3' at the first end 7' of the cylinder 6'.

An extruder nozzle 8', adapted to extrude the ceramic filament 2', is connected to the cylinder 6' at a second end 9' of the cylinder 6'.

An inlet channel 33' extends from the cylinder 6' and is in flow communication with the cylinder 6'.

The inlet channel 33' is adapted to feed a ceramic mixture 14' into the cylinder 6'.

A hopper 13' is connected to the inlet channel 33' and is in flow communication with the inlet channel 33'.

The hopper 13' is adapted to transfer the ceramic mixture 14' into the inlet channel 33'.

The cylinder 6', the worm screw 5', the inlet channel 33', the hopper 13' and the extruder nozzle 8' define a passage volume 12' through which the ceramic mixture 14' can flow.

At least one heating band 11' is arranged about the passage volume 12'.

At least one heating band 11' is positioned externally relative to the cylinder 6' and/or the worm screw 5' and/or the inlet channel 33' and/or the hopper 13' and/or the extruder nozzle 8'. Advantageously, in this manner, at least one heating band 11' does not come into contact with the ceramic mixture 14'.

According to an aspect of the invention, the worm screw 5', the cylinder 6', the inlet channel 33', the extruder nozzle 8' and the hopper 13' are made of either hardened stainless steel, or chrome-plated iron, or nickel-plated iron, or cemented carbide (also called "WIDIA") or silicon carbide.

Advantageously, a device 1' for manufacturing a ceramic filament 2' thus configured is more resistant to the abrasiveness of the ceramic mixture 14' processed by the device 1', and at the same time has lower costs because the components operationally subject to the abrasive action of the ceramic mixture 14' are made of more performing materials, while the remaining components of the device 1' can be made, and preferably are made, with less performing and therefore less expensive materials.

According to an embodiment, a plurality of heating bands 11' are arranged in several distinct points about the passage volume 12'.

For example, a heating band 11' is positioned at the cylinder 6' and the worm screw 5' and the inlet channel 33' and the hopper 13' and the extruder nozzle 8'.

Advantageously, such configuration achieves a dedicated heating of the ceramic mixture 14' in each zone of the passage volume 12' crossed by the ceramic mixture 14', and promotes the homogenization of the ceramic mixture 14'.

According to an embodiment, the device 1' comprises an electronic processing unit 30'.

The electronic processing unit 30' is configured to adjust the speed of the electric motor 4' to determine the drawing speed of the ceramic filament 2'.

Advantageously, this makes it possible to set an ideal drawing speed to reduce the friction between the ceramic material 14' and the device 1'.

According to a preferred embodiment, the drawing speed of the ceramic filament 2' is comprised between 5 mm/s and 100 mm/s, even more preferably between 10 mm/s and 70 mm/s.

According to an embodiment, the extruder nozzle 8' forms a filament outlet orifice 16' having a diameter comprised between 1.80 mm and 1.50 mm.

Advantageously, the ceramic filament 2' extruded by such an extruder nozzle 8' has a diameter so as to promote the winding thereof from a spool, reducing the risk of breakage of the ceramic filament 2' itself.

According to a further embodiment, the device 1' comprise a cooling circuit 17' downstream of the extruder nozzle 8'.

The cooling circuit 17' is configured to reduce the temperature of the ceramic filament 2' extruded from the extruder nozzle 8' by thermal conduction.

According to an embodiment, the cooling circuit 17' comprises a cooling bath, in which the ceramic filament 2' is cooled by thermal conduction.

Alternatively, the cooling circuit 17' comprises a metallic element at a lower temperature than the temperature of the ceramic filament 2', configured to convey the ceramic filament 2' along a cooling path and to cool the ceramic filament 2' by thermal conduction.

Advantageously, the cooling circuit 17' is made of a material with high thermal conductivity, e.g. copper, aluminum or brass.

Advantageously, the cooling circuit 17' reduces the waiting time needed to reduce the temperature of the newly extruded ceramic filament 2' so that it can be wound on a spool.

According to a further aspect of the invention, a system 18' for manufacturing a ceramic filament 2' comprises the previously described device 1' and an auger 15'.

The auger 15' is adapted to mix and the ceramic mixture 14' which feeds the device 1' and to make it homogeneous.

According to an embodiment, the auger 15' is arranged inside the hopper 13' or above the hopper 13' of the device 1' .

According to an embodiment, the system 18' further comprises a mill 20'.

The mill 20' is adapted to grind and pulverize a ceramic material so as to produce a ceramic material powder 21'.

Advantageously, the mill 20' is a ball mill.

The system 18' further comprises a mixer 22'.

The mixer 22' is adapted to mix the ceramic material powder 21' with various substances and additives so as to form a ceramic solution 23'.

Optionally, the system 18' may comprise a dosing device 24'.

The dosing device 24' is configured to dose the ceramic material powder 21' and the various substances and additives intended to be mixed in the mixer 22'.

The system 18' further comprises a dryer 25'.

The dryer 25' is configured to dry the ceramic solution 23' produced by the mixer 22' to manufacture a solid body of ceramic mixture 26'.

The system 18' further comprises a shredder 27'.

The shredder 27' is configured to shred, crumble and chop the solid body of ceramic mixture 26', forming ceramic mixture flakes 28' to feed the device 1' for manufacturing a ceramic filament 2'.

The system 18' for manufacturing a ceramic filament 2' further comprises at least one spool 29', on which the ceramic filament 2' made by the device 1' can be wound.

According to an embodiment, the inner diameter of the spool 29' is about 20 cm.

According to a further aspect of the invention, a method for manufacturing a ceramic filament 2' comprises the steps of manufacturing described below.

The method provides a step of pulverizing of a ceramic material, in a mill 20', in which the ceramic material is pulverized to produce a ceramic material powder 21'.

According to an embodiment, the ceramic material which can be used in the method is one (or a combination) of the ceramic materials listed in the following group:
- Alumina;
- Zirconia with magnesium or yttrium or strontium or cerium;
- Titanium oxide;
- Tialite (aluminum and titanium oxide);
- Aluminum and magnesium spinel;
- Silicon carbide;
- Silicon nitride;
- Boron carbide;
- Titanium nitride.

Preferably, after pulverization, the size of the ceramic material powder 21' is of the order of 1 µm.

Subsequently, a step of mixing is carried out in a mixer 22', in which the ceramic material powder 21' is mixed with at least one polymeric material and at least one solvent so as to produce a ceramic solution 23'.

The polymeric material acts as a binder for the ceramic material powder 21', forming a polymer matrix, and increases the flexibility of the resulting ceramic filament 2'.

According to a preferred embodiment, the at least one polymeric material is chosen in the group comprising:
- ABS (Acrylonitrile-Butadiene-Styrene) preferably in granules;
- Stearic acid;
- PET-G (Polyethylene terephthalate glycol-modified) preferably in granules;
- PVC (Polyvinyl chloride);
- DOP (Dioctylphthalate);
- PA (Polyacrylate);
- PEG (Polyethylene glycol);
- Nylon.

According to an advantageous embodiment, the polymeric material constitutes between 35% and 25% of the total mass of ceramic material powder 21' and polymeric material. This concentration is preferable if the polymeric material comprises ABS and stearic acid.

Even more advantageously, the polymeric material constitutes between 25% and 15% of the total mass of ceramic material powder 21' and polymeric material. This concentration is preferable if the polymeric material comprises ABS and PEG and PA or DOP.

Even more advantageously, the polymeric material constitutes between 15% and 5% of the total mass of ceramic material powder 21' and polymeric material.

Advantageously, such a concentration of polymeric material increases flexibility while concurrently preserving the thermomechanical properties of the resulting ceramic filament 2'.

According to a further preferred embodiment, the stearic acid constitutes between 2.5% and 5% of the total mass of ceramic material powder 21' and polymeric material.

According to a further preferred embodiment, the DOP constitutes between 2% and 6% of the total mass of ceramic material powder 21' and polymeric material.

According to a further preferred embodiment, the PA constitutes between 2% and 6% of the total mass of ceramic material powder 21' and polymeric material.

According to a further preferred embodiment, the PEG constitutes between 0.5% and 1% of the total mass of ceramic material powder 21' and polymeric material.

Advantageously, such a low percentage by mass of polymer material significantly increases the flexibility of the resulting ceramic filament 2'.

According to a preferred embodiment, at least one solvent is acetone.

Optionally, the step of mixing in the mixer 22' is preceded by a step of dosing, in a dosing device 24', of the ceramic material powder 21', at least one polymeric material and at least one solvent.

After the step of mixing, there is a step of drying, in a dryer 25', adapted to dry the ceramic solution 23' produced by the mixing, so as to eliminate the solvent (e.g. the acetone) from the ceramic solution 23', and produce a solid body of ceramic mixture 26'.

Preferably, the drying takes place so that the solid body of ceramic mixture 26' takes the shape of a slab.

Advantageously, the slab shape facilitates a subsequent step of shredding of the solid body of ceramic mixture 26'.

After drying, there is a step of shredding, in a shredder 27', in which the solid body of ceramic mixture 26' is shredded into ceramic mixture flakes 28'.

Subsequently, the method provides a step of feeding of the device 1' previously described, which is fed with the ceramic mixture flakes 28' unloaded into the hopper 13' of the device 1'.

Subsequently, a drawing cycle is provided, in the device 1', in which the ceramic mixture flakes 28' pass through the passage volume 12', inside which they are compacted by the worm screw 5' and heated by at least one heating band 11', so as to form a homogeneous ceramic mixture 14'.

Preferably, the ceramic mixture 14' is subjected to multiple drawing cycles within the device 1', to produce an even more homogeneous and performing ceramic filament 2'.

Preferably, within the passage volume 12', the ceramic mixture 14' heated by at least one heating band 11' reaches a temperature comprised between 190 °C and 240 °C.

Advantageously, such a temperature promotes the homogenization of the ceramic mixture 14', i.e. the uniform mixing of ceramic material and polymeric material in the ceramic mixture 14'.

Subsequently, a step of extruding is provided, in which the ceramic mixture 14' is extruded by the extruder nozzle 8', forming a ceramic filament 2'.

Advantageously, the method described manufactures an improved ceramic filament 2' adapted to be used in an additive manufacturing process.

Indeed, such a ceramic filament 2' has a bending strength such to allow it to be wound on a spool and, at the same time, preserves the thermomechanical properties typical of ceramic materials.

This is due to the high mass ratio of the ceramic material with respect to the total mass of the ceramic filament 2', and to the use of polymeric materials which increase the flexibility of the ceramic filament 2', negligibly invalidating the thermomechanical properties of the filament.

Optionally, the method provides a step of winding, after the step of drawing, in which the ceramic filament 2' is wound on a spool 29'.

Surprisingly, it was observed that the ceramic filament 2' coming out of the extruder nozzle 8' is deposited on the floor naturally in coils.

Advantageously, this promotes the subsequent winding of the ceramic filament 2' on the spool 29'.

With a further advantage, the ceramic filament 2' thus manufactured has a natural curvature intermediate between the curvature of the spool (the curvature that the ceramic filament 2' will assume when it is wound on the spool) and the null curvature (the curvature that the ceramic filament 2' will assume when it feeds a 3D printer). Therefore, the natural curvature of the ceramic filament 2' thus manufactured is ideal to avoid breakage of the ceramic filament 2' itself due to excessive deformation when wound on the spool or when fed into a 3D printer.

Preferably, the ceramic filament 2' wound on the spool 29' is locked in place by applying adhesive tape.

Optionally, following the step of drawing, a step of cooling may be provided, in a cooling circuit 17', in which the ceramic filament 2' is conveyed along a cooling path where it is cooled by thermal conduction.

### Description of a device and method for manufacturing a ceramic green body

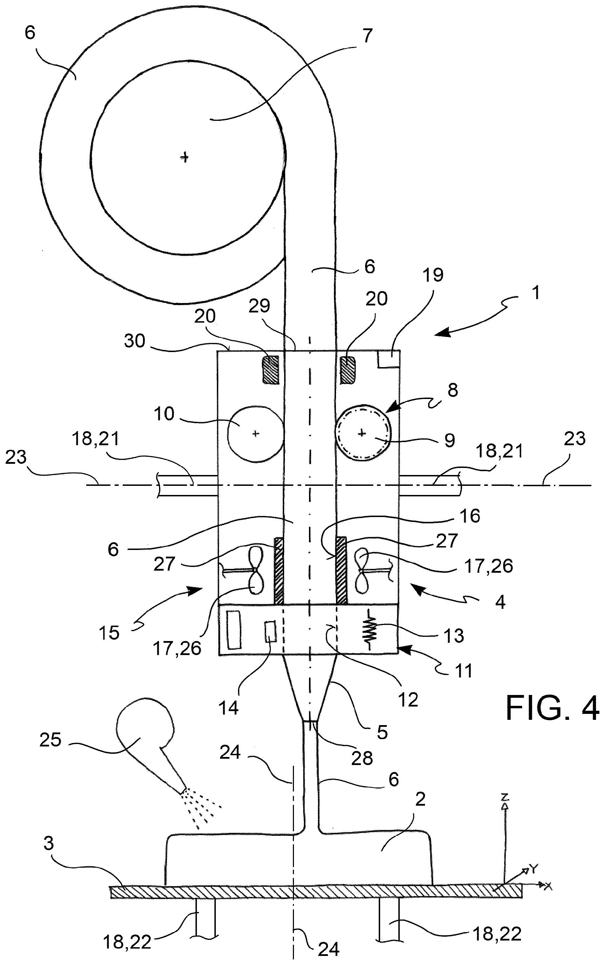

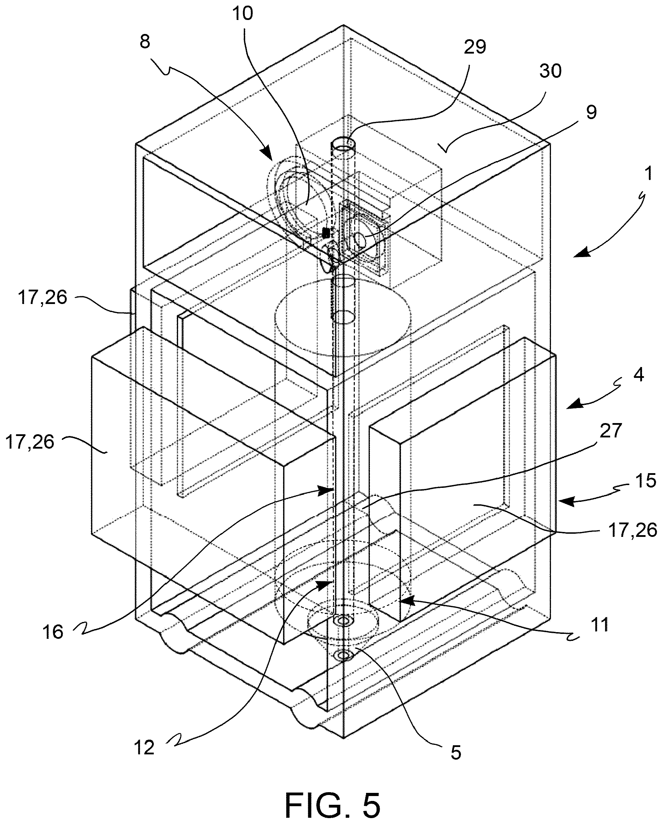

With reference to figures 4 and 5, a device 1 for the manufacturing a ceramic green body 2, comprises a platform 3.

The device 1 further comprises a print head 4 arranged over the platform 3.

The print head 4 comprises an outlet nozzle 5, adapted to convey and dispense a ceramic filament 6, so as to manufacture the green ceramic body 2 on the platform 3.

The print head 4 further comprises a feeding device 8, configured to guide and feed the ceramic filament 6 towards the outlet nozzle 5.

The print head 4 further comprises a heating block 11, which is interposed between the feeding device 8 and the outlet nozzle 5.

The heating block 11 forms a heating channel 12 for the passage of the ceramic filament 6.

Inside the heating block 11 and near the heating channel 12 there are a heating element 13, adapted to heat a portion of the ceramic filament 6 passing through the heating channel 12 and a heat sensor 14, adapted to measure the temperature of the ceramic filament 6 and/or of the heating element 13.

The print head 4 further comprises a cooling block 15, which is interposed between the feeding device 8 and the heating block 11.

The cooling block 15 forms a cooling channel 16 for the passage of the ceramic filament 6.

The cooling block 15 comprises cooling means 17 arranged near the cooling channel 16 and adapted to cool a portion of ceramic filament 6 passing through cooling channel 16.

Advantageously, the cooling means 17 cool the ceramic filament 2 so that the heat generated by the underlying heating block 11 does not propagate in the direction of the feeding device 8, thus preventing damage and malfunctioning of the device 1.

The device 1 further comprises a spool 7 arranged above the print head 4 and adapted to support and unwind the ceramic filament 6 in the direction of the print head 4.

The device 1 comprises moving means 18, configured to move the platform 3 and/or the print head 4.

The device 1 further comprises a computer 19 configured to control at least the moving means 18, the feeding device 8, the heating block 11 and the cooling block 15.

According to an aspect of the invention, the heating channel 12 and the outlet nozzle 5 are made of hardened stainless steel, or chrome-plated iron or nickel-plated iron, or cemented carbide (also named "WIDIA") or silicon carbide.

Advantageously, a device 1 for manufacturing a ceramic green body 2 thus configured is more resistant to the abrasiveness of the ceramic filament 6 worked by the device 1, and at the same time has lower costs because the components operationally subject to the abrasive action of the ceramic filament 6 are made of more performing materials, while the remaining components of the device 1 can be made, and preferably are made, with less performing and therefore less expensive materials.

According to an embodiment, the device 1 comprises a frame which supports the spool 7, the print head 4, the platform 3 and the moving means 18.

According to an embodiment, the feeding device 8 comprises a drive wheel 9 and an idle wheel 10.

Preferably, the drive wheel 9 and the idle wheel 10 are also made of hardened stainless steel, or chrome-plated iron or nickel-plated iron, or cemented carbide or silicon carbide.

According to this embodiment, the feeding device 8 comprises a mechanism for adjusting the distance between the drive wheel 9 and the idle wheel 10 which, consequently, makes it possible to adjust the friction force, and thus the driving force, actuated by the drive device 8 on the ceramic filament 6.

Advantageously, such a mechanism for adjusting the distance between the drive wheel 9 and the idle wheel 10 makes it possible to reduce the abrasive action of the ceramic filament 6 acting on the feeding device 8.

According to an alternative embodiment, the feeding device 8 comprises two synchronous drive wheels 9, both made of hardened stainless steel, or chrome-plated iron or nickel-plated iron, or case-hardened carbide or silicon carbide.

According to an embodiment, the platform 3 comprises a platform heating device, configured to increase the temperature of the platform 3.

Advantageously, by heating the platform 3, the risk that the ceramic filament deposited on the platform 3 will deform thermally in undesirable manner on contact with the platform 3 is reduced.

According to an embodiment, the heating element 13 of the heating block 11 consists of a resistor.

According to an embodiment, the cooling means 17 of the cooling block 15 comprise at least one fan 26.

According to an embodiment, the cooling means 17 comprise three fans 26.

According to a further embodiment, the cooling channel 16 of the cooling block 15 consists of a metal duct 27.

Advantageously, the metal duct 27 is in contact with the ceramic filament 6 and promotes the cooling of the ceramic filament 6 by the cooling means 17.

According to an embodiment, a pipe made of PTFE is arranged inside the metal duct 27. The pipe made of PTFE acts as a thermal insulator so that the ceramic filament 6 running inside it is not heated.

According to a preferred embodiment, the metal duct 27 forms cooling fins, adapted to promote the heat dissipation of the ceramic filament 6 in contact with the metal duct 27.

According to a further embodiment, the print head 4 comprises a filament presence sensor 20, arranged above the feeding device 8.

The filament presence sensor 20 is configured to detect the presence of the ceramic filament 6 descending from the spool 7.

According to an embodiment, the device 1 is configured so that the ceramic filament 6 descends freely from the spool 7 through an inlet opening 29 formed on a top surface 30 of the print head 4 facing the spool 7.

Advantageously, this simplifies the device 1 because it is not necessary to provide a further drive to regulate the unwinding of ceramic filament 6 from the spool 7, and the tensioning acting on ceramic filament 6 is also reduced.

According to an embodiment, the moving means 18 comprise first moving means 21 and second moving means 22.

The first moving means 21 are configured to move the print head 4, while the second moving means 22 are configured to move the platform 3.

According to an advantageous embodiment, the first moving means 21 are configured to handle the print head 4 on a transverse plane 23 parallel to a plane on which platform 3 extends.

According to this embodiment, the second moving means 22 are configured to move the platform 3 along a vertical direction 24 perpendicular to the transverse plane 23.

Advantageously, such a configuration of the moving means 18 reduces the tension acting on the ceramic filament 6 during the molding of the ceramic green body 2.

Indeed, this configuration avoids sudden stretching of the ceramic filament 6 unwound from the spool 7, because the transversal plane 23 is always at the same distance from the spool 7, while the platform 3 is moved in height, along the vertical direction 24.

In this manner, both the risk of damage and breakage of the ceramic filament 6, and the abrasive action of the ceramic filament 6 acting on device 1, are reduced.

According to an embodiment of the invention, the spool 7 is integral with the print head 4 so as to be moved together with the print head 4 by the first moving means 21.

Advantageously, this makes it possible to reduce the tensioning of the ceramic filament 6 unwound from the spool 7, because they are substantially canceled by the relative movements between the spool 7 and the print head 4 are substantially eliminated.

According to an embodiment of the invention, the spool 7 is connected integrally to the print head 4; furthermore, the spool 7 and the print head 4 are not moved, and wherein the second moving means 22 move the platform 3 both along the transversal plane 23 and along the vertical direction 24.

Advantageously, this makes it possible to further reduce the tensioning of the ceramic filament 6 unwound from the spool 7, because it is only the platform 3 to be moved, while the spool 7 and print head 4 are not moved by the moving means 18.

According to an embodiment of the invention, the device 1 comprises ventilation means 25 arranged at the print head 4 and wherein air flow is directed under the outlet nozzle 5.

The ventilation means 25 are adapted to cool the ceramic green body 2, and in particular a portion of ceramic filament 6 just deposited on the ceramic green body 2.

According to an embodiment, the outlet nozzle 5 defines an outlet orifice 28 with a diameter comprised between 1.0 mm and 0.2 mm.

Preferably, the diameter of the output orifice 28 is 0.4 mm.

According to a further aspect of the invention, a method for manufacturing a ceramic green body 2, by means of the device 1 described above, comprises the steps of manufacturing described below.

The method provides a step of unwinding, wherein the ceramic filament 6, wound on the spool 7, is unwound so as to descend freely in the direction of the device 1, and to be inserted inside the print head 4.

Successively, the method provides a step of feeding, wherein the feeding device 8 guides and feeds the ceramic filament 6 towards the outlet nozzle 5.

Successively, a step of heating is provided, wherein a portion of the ceramic filament 6 passing through the heating channel 12 of the heating block 11 is heated by the heating element 13.

At the same time as the step of heating, a step of cooling is provided, wherein a portion of the ceramic filament 6 passing through the cooling channel 16 of the cooling block 15 is cooled by the cooling means 17.

Successively, a step of deposition is provided, wherein the ceramic filament 6 extruded from the extruder nozzle 8 is deposited on the platform 3 thereby forming the green ceramic body 2.

The step of moving occurs at the same time as the step of deposition, wherein the moving means 18 move the platform 3 and/or the print head 4, so that the device 1 prints a green body 2 of a predetermined shape.

Advantageously, such a method reduces the tensioning of the machined ceramic filament 6 and the defects of the manufactured ceramic green body 2.

According to an embodiment, the step of moving comprises moving the print head 4 by means of the first moving means 21 and moving the platform 3 by means of the second moving means 22.

The first moving means 21 move the print head 4 on a transverse plane 23 parallel to a plane on which the platform 3 extends, while the second moving means 22 move the platform 3 along a vertical direction 24 perpendicular to the transverse plane 23.

According to a further embodiment, the step of deposition takes place at the same time as a step of ventilating of the ceramic green body 2, using the ventilation means 25 arranged near the platform 3.

According to a further embodiment, a step of heating of the platform 3 is provided at the same time as the step of deposition, in which a platform heating device increases the temperature of the platform 3.

In this manner, the risk of the ceramic filament deposited on the platform 3 thermally deforming in undesirable manner upon contact with the platform 3 is reduced. Furthermore, in this manner, a warmer ceramic filament adhesion support is ensured so that the ceramic filament adheres to the platform 3 and the first placements of ceramic filament 6 can easily adhere to subsequent placements.

According to an embodiment, the ceramic filament 6, which can be used in the aforesaid method for manufacturing a ceramic green body 2, contains one (or a combination) of the ceramic materials listed in the following group:
- Alumina;
- Zirconia with magnesium or yttrium or strontium or cerium;
- Titanium oxide;
- Tialite (aluminum and titanium oxide);
- Aluminum and magnesium spinel;
- Silicon carbide;
- Silicon nitride;
- Boron carbide;
- Titanium nitride.

### Description of a method for manufacturing a ceramic product

According to an aspect of the invention, a method for manufacturing a ceramic product comprises the steps of manufacturing described below.

The method provides preparing a ceramic green body.

Subsequently, the method provides subjecting a ceramic green body to a step of primary heating.

During this step, the ceramic green body is progressively heated from room temperature Ta to a final primary heating temperature T1, to remove the binders with which the ceramic green body is soaked.

In such a manner, a binder-free ceramic semi-finished product is obtained.

Subsequently, the method provides sintering the semi-finished ceramic product.

During the step of sintering, the ceramic semi-finished product is progressively heated from an initial sintering temperature Tis to a final sintering temperature T3.

The initial sintering temperature Tis can be either greater than or equal to the ambient temperature Ta, and the final sintering temperature T3 is greater than the final primary heating temperature T1.

Optionally, the preparation of the ceramic green body comprises:
- conveying and dispensing onto a platform a ceramic filament comprising ceramic material mixed in a polymeric matrix, and thermally softened, to form the ceramic green body,
- cooling or letting the ceramic green body cool.

In such a manner, the semi-finished ceramic product is sintered and the ceramic product is obtained.

Advantageously, such a method of manufacturing a ceramic product is fast and does not affect the quality of the final ceramic product.

Therefore, by means of such a method, the formation of defects and/or cracks is reduced.

Furthermore, by means of such a method, it is possible to manufacture a ceramic product with better thermomechanical properties.

According to an embodiment, after the step of primary heating and before the step of sintering, the ceramic semi-finished product is subjected to a step of auxiliary heating, wherein the ceramic semi-finished product is progressively heated from an initial auxiliary heating temperature, at which the initial temperature of the auxiliary heating is either higher than or equal to ambient temperature Ta, up to a final auxiliary heating temperature T2, at which the final auxiliary heating temperature T2 is higher than the final primary heating temperature T1, so as to partially compact the semi-finished ceramic product and obtain a partially compact semi-finished ceramic product. Furthermore, the final sintering temperature T3 is higher than the final auxiliary heating temperature T2.

Advantageously, by means of this step of auxiliary heating a more compact semi-finished ceramic product is obtained that can be handled with greater safety and reduces the risk of breakage.

According to an embodiment of the invention, the step of primary heating is performed in an inert atmosphere.

According to this embodiment, the step of primary heating is performed in air, said step of primary heating lasts from 24 hours to 48 hours and the final primary heating temperature T1 is comprised from 600 °C to 800 °C.

Preferably, the step of primary heating lasts for 36 hours and the final primary heating temperature T1 is 700 °C.

Preferably, the inert atmosphere is nitrogen.

Advantageously, according to such parameters, the shape of the ceramic green body is better preserved during the step of primary heating and thus a semi-finished ceramic product with an improved shape is obtained.

Furthermore, the aforesaid parameters make it possible to reduce the manufacturing time of the semi-finished ceramic product.

According to an alternative embodiment, the step of primary heating is performed in air.

According to this embodiment, the step of primary heating is performed in air, said step of primary heating lasts from 144 hours to 168 hours and the final primary heating temperature T1 is comprised from 550 °C to 750 °C.

Preferably, the step of primary heating lasts for 156 hours and the final primary heating temperature T1 is 650 °C.

Advantageously, according to these parameters, a semi-finished ceramic product with a higher density is obtained.

With further advantage, a method performed according to such parameters is particularly adapted to the production of ceramic products having not particularly complex shapes and geometries.

According to an embodiment, the step of auxiliary heating takes place at a heating rate comprised between 30 °C/h and 70 °C/h and the final auxiliary heating temperature T2 is comprised between 800 °C and 1400 °C.

Preferably, the step of auxiliary heating takes place at a heating rate of 50 °C/h, and the final auxiliary heating temperature T2 is comprised between 1000 °C and 1200 °C.

Advantageously, according to such parameters, a partially compact semi-finished ceramic product of improved quality is obtained.

Furthermore, the aforesaid parameters make it possible to reduce the manufacturing time of the partially compact ceramic semi-finished product.

According to an embodiment, the step of auxiliary heating is performed in air.

According to an advantageous embodiment, the step of primary heating and the step of auxiliary heating take place in the same kiln.

According to an embodiment, the heating speed, maximum temperature and dwelling time of the sintering phase are linked to the nature of the ceramic green body subjected to such a manufacturing method of a ceramic product.

For example, the final sintering temperature T3 is:
- from 1650 °C to 1750 °C, preferably 1700 °C, for aluminum oxide-based ceramic products;
- from 1650 °C to 1750 °C, preferably 1700 °C, for zirconia with magnesium-based ceramic products;
- from 1400 °C to 1500 °C, preferably 1450 °C, for zirconia with yttrium-based ceramic products;
- from 1600 °C to 1700 °C, preferably 1630 °C, for zirconia with strontium-based ceramic products;
- from 1500 °C to 1600 °C, preferably 1540 °C, for zirconia with cerium-based ceramic products;
- 1350 °C to 1450 °C, preferably 1385 °C, for titanium oxide-based ceramic products;
- 1400 °C to 1500 °C, preferably 1460 °C, for tialite (aluminium and titanium oxide)-based ceramic products;
- from 1600 °C to 1700 °C, preferably 1635 °C, for aluminum and magnesium spinel-based ceramic products;
- 1950 °C to 2050 °C, preferably 2000 °C, for silicon carbide-based ceramic products;
- from 1700 °C to 1800 °C, preferably 1740 °C, for silicon nitride-based ceramic products;
- higher than 2100 °C for boron carbide-based ceramic products;
- from 1700 °C to 1800 °C, preferably 1740 °C, for titanium nitride-based ceramic products.

According to an embodiment, the ceramic green body subjected to the aforesaid method for manufacturing a ceramic product, contains one (or a combination) of the ceramic materials listed in the following group:
- Aluminum oxide;
- Zirconia with magnesium or yttrium or strontium or cerium;
- Titanium oxide;
- Tialite (aluminum and titanium oxide);
- Aluminum and magnesium spinel;
- Silicon carbide;
- Silicon nitride;
- Boron carbide;
- Titanium nitride.

Therefore, according to this embodiment, the aforementioned method manufactures a ceramic product consisting of:
- Alumina;
- Zirconia with magnesium or yttrium or strontium or cerium;
- Titanium oxide;
- Tialite (aluminum and titanium oxide);
- Aluminum and magnesium spinel;
- Silicon carbide;
- Silicon nitride;
- Boron carbide;
- Titanium nitride;
- combinations of the preceding ceramic materials.

According to a preferred embodiment, at the end of the step of primary heating and of the step of auxiliary heating, the semi-finished ceramic product is cooled to room temperature Ta.

Furthermore, also at the end of the step of sintering, the ceramic product is cooled to room temperature Ta.

Of course, a person skilled in the art can made further changes and variants all contained within the scope of protection defined by the claims in order to satisfy contingent, specific needs.

## Claims

1. A method for manufacturing a ceramic product, comprising the following steps of manufacturing:
- preparing a ceramic green body,
- subjecting the ceramic green body to a step of primary heating, wherein the ceramic green body is progressively heated from ambient temperature (Ta) to a final primary heating temperature (T1), to remove binders from the ceramic green body and obtain a semi-finished ceramic product free from binders;
- subjecting the semi-finished ceramic product to a step of sintering, wherein the semi-finished ceramic product is progressively heated from an initial sintering temperature (Tis), at which the initial sintering temperature (Tis) is either higher than or equal to ambient temperature (Ta), to a final sintering temperature (T3), at which the final sintering temperature (T3) is higher than the final primary heating temperature (T1), to sinter the semi-finished ceramic product and obtain the ceramic product,
wherein, optionally, the preparation of the ceramic green body comprises:
- conveying and dispensing onto a platform a ceramic filament comprising ceramic material mixed in a polymeric matrix, and thermally softened, to form the ceramic green body,
- cooling or letting the ceramic green body cool.

2. A method according to claim 1, wherein after the step of primary heating and before the step of sintering, the ceramic semi-finished product is subjected to a step of auxiliary heating, wherein the ceramic semi-finished product is progressively heated from an initial auxiliary heating temperature, at which the initial temperature of the auxiliary heating is either higher than or equal to ambient temperature (Ta), up to a final auxiliary heating temperature (T2), at which the final auxiliary heating temperature (T2) is higher than the final primary heating temperature (T1), so as to partially compact the semi-finished ceramic product and obtain a partially compact semi-finished ceramic product,
and wherein the final sintering temperature (T3) is higher than the final auxiliary heating temperature (T2).

3. A method according to claim 1 or 2, wherein the step of primary heating is performed in an inert atmosphere, said step of primary heating lasts from 24 to 48 hours, and wherein the final primary heating temperature (T1) is comprised from 600 °C to 800 °C.

4. A method according to claim 3, wherein the step of primary heating lasts for 36 hours, and wherein the final primary heating temperature (T1) is 700 °C.

5. A method according to claim 3 or 4, wherein the inert atmosphere consists of nitrogen.

6. A method according to claim 1 or 2, wherein the step of primary heating is performed in air, said step of primary heating lasts from 144 hours to 168 hours, and wherein the final primary heating temperature (T1) is comprised from 550 °C to 750 °C.

7. A method according to claim 6, wherein the step of primary heating lasts for 156 hours, and wherein the final primary heating temperature (T1) is 650 °C.

8. A method according to any one of the preceding claims and according to claim 2, wherein the step of auxiliary heating takes place at a heating rate comprised between 30 °C/h and 70 °C/h, and wherein the final auxiliary heating temperature (T2) is comprised between 800 °C and 1400 °C.

9. A method according to claim 8, wherein the step of auxiliary heating takes place at a heating rate of 50 °C/h, and wherein the final auxiliary heating temperature (T2) is comprised between 1000 °C and 1200 °C.

10. A method according to any one of the preceding claims and according to claim 2, wherein the step of primary heating and the step of auxiliary heating take place in the same kiln.

11. A method according to any one of the preceding claims, wherein the final sintering temperature (T3) is:
- from 1650 °C to 1750 °C for aluminum oxide-based ceramic products;
- from 1650 °C to 1750 °C for zirconia with magnesium-based ceramic products;
- from 1400 °C to 1500 °C for zirconia with yttrium-based ceramic products;
- from 1600 °C to 1700 °C for zirconia with strontium-based ceramic products;
- from 1500 °C to 1600 °C for zirconia with cerium-based ceramic products;
- 1350 °C to 1450 °C for titanium oxide-based ceramic products;
- from 1400 °C to 1500 °C for tialite-based ceramic products;
- from 1600 °C to 1700 °C for aluminum and magnesium spinel-based ceramic products;
- 1950 °C to 2050 °C for silicon carbide-based ceramic products;
- from 1700 °C to 1800 °C for silicon nitride-based ceramic products;
- higher than 2100 °C for boron carbide-based ceramic products;
- from 1700 °C to 1800 °C for titanium nitride-based ceramic products.

12. A method according to any one of the preceding claims, wherein the final sintering temperature (T3) is:
- 1700 °C for aluminum oxide-based ceramic products;
- 1700 °C for zirconia with magnesium-based ceramic products;
- 1450 °C for zirconia with yttrium-based ceramic products;
- 1630 °C for zirconia with strontium-based ceramic products;
- 1540 °C for zirconia with cerium-based ceramic products;
- 1385 °C for titanium oxide-based ceramic products;
- 1460 °C for tialite-based ceramic products;
- 1635 °C for aluminum and magnesium spinel-based ceramic products;
- 2000 °C for silicon carbide-based ceramic products;
- 1740 °C for silicon nitride-based ceramic products;
- higher than 2100 °C for boron carbide-based ceramic products;
- 1740 °C for titanium nitride-based ceramic products.

13. A method according to any one of the preceding claims, wherein the ceramic green body contains, and the manufactured ceramic product consists of, either one or a combination of the ceramic materials listed in the following group:
- Aluminum oxide;
- Zirconia with magnesium or yttrium or strontium or cerium;
- Titanium oxide;
- Tialite (aluminum and titanium oxide);
- Aluminum and magnesium spinel;
- Silicon carbide;
- Silicon nitride;
- Boron carbide;
- Titanium nitride.

14. A method according to claim 2, wherein, at the end of the step of primary heating, at the end of the step of auxiliary heating and at the end of the step of sintering, the semi-finished ceramic product or the ceramic product is cooled to ambient temperature (Ta).

15. A method according to one of the claims from 2 to 13, wherein the initial auxiliary heating temperature is equal to the final primary heating temperature (T1), and the initial sintering temperature (Tis) is equal to the final auxiliary heating temperature (T2).
